# EUROPÄISCHE PATENTSCHRIFT

(11) **EP 1 063 424 B1**
(45) Veröffentlichungstag und Bekanntmachung des Hinweises auf die Patenterteilung: **18.12.2002**
(21) Anmeldenummer: 00111041.0
(22) Anmeldetag: 31.05.2000
(51) Int. Cl.: F02N 11/08

(54) **Verfahren bzw. Einrichtung zum Wiederanlassen des Motors eines Kraftfahrzeuges**
Method and resp. device for restarting the motor of a vehicle
Méthode et resp. dispositif pour redémarrer le moteur d'un véhicule

(30) Priorität: 21.06.1999 DE 19928373
(43) Veröffentlichungstag der Anmeldung: 27.12.2000
(73) Patentinhaber: Volkswagen Aktiengesellschaft, 38436 Wolfsburg (DE)
(72) Erfinder: Rüdiger, Reinhard, Dipl.-Ing., 31226 Peine (DE)

(56) Entgegenhaltungen:
- DE-A- 3 043 309
- DE-A- 3 246 658
- DE-A- 3 423 663

## Beschreibung

Die Erfindung betrifft ein Verfahren zum Wiederanlassen des Motors eines Kraftfahrzeuges, wobei der Motor in bestimmten Fahrbetriebszuständen, insbesondere im Standbetrieb, zur Kraftstoffverbrauchseinsparung zumindest zeitweise ausgeschaltet wird und für einen Wechsel des Fahrbetriebszustandes, vorzugsweise vom Standbetrieb in den Fahrbetrieb, wieder eingeschaltet wird. Weiterhin betrifft die Erfindung eine Einrichtung zum Wiederanlassen des Motors eines Kraftfahrzeuges, insbesondere eine elektronische Schalteinrichtung, arbeitend nach dem zuvor genannten Verfahren, mit einer elektronischen Anlaßvorrichtung zum Einschalten bzw. Anlassen eines Motors, mit einem elektronischen Steuergerät und mit einem die Stellung und/oder Bewegungsrichtung des Bremspedals ermittelnden Sensor, wobei die Anlaßvorrichtung und der Sensor schaltungstechnisch mit dem Steuergerät verbunden sind, wobei mit Hilfe des Steuergerätes der Motor in einem bestimmten Fahrbetriebszustand, insbesondere im Standbetrieb, zur Kraftstoffverbrauchseinsparung ausschaltbar und für einen Wechsel des Fahrbetriebszustandes, vorzugsweise vom Standbetrieb in den Fahrbetrieb, einschaltbar ist.

Im Stand der Technik, von dem die Erfindung ausgeht (DE-A-30 43 309), ist ein Verfahren bzw. eine Einrichtung zum Wiederanlassen des im Standbetrieb abgestellten Motors bekannt, wobei die Betätigung des Bremspedals als Impulsgabe für eine elektronische Anlaßvorrichtung benutzt wird. Im Stand der Technik wird bei Kraftfahrzeugen mit automatisierten Schaltgetriebe zwecks Benzineinsparung und Umweltschutz eine selbsttätige Abstellung des Motors beim Anhalten vor Verkehrsampeln und in Staus durchgeführt. Hierzu sind bereits verschiedene Verfahren bzw. Einrichtungen bekannt. Bisher sind diese Verfahren bzw. Einrichtungen darauf ausgerichtet, daß beim Wiederanlassen des Motors eine zuverlässige Absicherung des Kraftfahrzeuges gegen vorzeitiges Vorwärtsrollen erfolgt. Gemäß der DE-A-30 43 309 wird nun ein Verfahren beschrieben, bei dem der Motor im Standbetrieb des Kraftfahrzeuges, beispielsweise vor einer roten Ampel oder im Stau, abgeschaltet wird.

Um den Motor wieder anzulassen muß, der Fahrer des Kraftfahrzeuges, der im allgemeinen, wenn er vor der roten Ampel oder im Stau steht, das Bremspedal konstant betätigt, nunmehr das Bremspedal entsprechend "lockern", d.h. in die Richtung seiner Ausgangsstellung bewegen, -einfach ausgedrückt-, den Fuß zunächst vom Bremspedal nehmen. Um allerdings dann den Motor entsprechend starten zu können, muß der Fahrer hiernach wieder auf das Bremspedal drücken und dieses betätigen, woraufhin der Motor angelassen wird. Um bei dem hier bekannten Verfahren bzw. bei der bekannten Einrichtung den Motor zu starten, muß der Fahrer folglich zwei Schritte durchführen, nämlich einerseits zunächst das Bremspedal lockern, um dieses hiernach sofort wieder zu betätigen, wobei der Motor erst bei der Durchführung des zweiten Schrittes, nämlich der Betätigung des Bremspedals, also der Bewegung des Bremspedals von seiner Ausgangsstellung in seine Bremsstellung, angelassen wird.

Weiterhin ist im Stand der Technik bei Fahrzeugen mit START/STOP-Betrieb bekannt, daß der Verbrennungsmotor in bestimmten Zuständen im Stand des Fahrzeuges zur Kraftstoffverbrauchseinsparung abgeschaltet wird, wobei der Verbrennungsmotor dann mit leichtem Druck auf das Gaspedal wieder eingeschaltet werden kann, da durch die Betätigung des Gaspedals dem Steuergerät signalisiert wird, daß der Fahrer des Kraftfahrzeuges nunmehr weiterfahren möchte. Die Anlaßvorrichtung des Verbrennungsmotors wird dann entsprechend durch das Steuergerät aktiviert, der Motor gestartet, eingekuppelt und das Kraftfahrzeug entsprechend gefahren.

Bei dem zuletzt geschilderten Verfahren ist problematisch, daß hier für den Wiederstart bzw. das Wiederanlassen des Motors eine relativ lange Zeitdauer benötigt wird, bis das Fahrzeug tatsächlich losfahren kann. Insbesondere beim Wiederanlassen des Motors bzw. Losfahren des Fahrzeuges am Berg kann dies problematisch sein, da das Kraftfahrzeug hier zurückrollen kann. Aber auch in der Ebene ist für den Fahrer nicht unbedingt ersichtlich, daß ein leichter Druck auf das Gaspedal zunächst den Motor und danach das Kraftfahrzeug selbst in Betrieb setzt. Auch bei dem durch die DE-A-30 43 309 bekannten Verfahren bzw. bei der hier bekannten beschriebenen Einrichtung ist das Verfahren bzw. die Einrichtung zum Wiederanlassen des Motors für den Fahrer sehr aufwendig. Dieser muß nämlich, um ein Wiederanlassen des Motors zu realisieren zwei Schritte durchführen, nämlich zunächst das Bremspedal lockern und hiernach das Bremspedal wieder betätigen, wobei in der dann wieder-betätigten Stellung des Bremspedals erst der Motor wieder angelassen wird.

Der Erfindung liegt daher die Aufgabe zugrunde, das Verfahren bzw. die Einrichtung der eingangs genannten Art derart auszugestalten und weiterzubilden, daß ein Wiederanlassen des Motors vereinfacht ist, insbesondere längere Zeitspannen zum Wiederanlassen des Motors vermieden werden.

Die zuvor gezeigte Aufgabe ist nun für das Verfahren dadurch gelöst, daß der Motor eingeschaltet wird, wenn das bereits betätigte Bremspedal - aus seiner betätigten Stellung kommend, sich in seine Ausgangsposition zurückbewegend - eine bestimmte, zumindest seine Ausgangsstellung angenäherte Position erreicht hat. Die zuvor aufgezeigte Aufgabe ist nun für die Einrichtung dadurch gelöst, daß - bei der Bewegung des Bremspedals aus seiner betätigten Stellung in Richtung seiner Ausgangsposition - durch den Sensor eine bestimmte, zumindest die Ausgangsstellung des Bremspedals angenäherte Position ermittelbar ist, durch den Sensor ein Signal an das Steuergerät abgebbar ist und durch das Steuergerät bzw. die Anlaßvorrichtung dann der Motor einschaltbar ist.

Durch das erfindungsgemäße Verfahren bzw. die erfindungsgemäße Vorrichtung wird das Wiederanlassen des Motors, also der START/STOP-Betrieb wesentlich vereinfacht. Einerseits muß der Fahrer, wie bisher im Stand der Technik üblich, eben nicht mehr das Bremspedal "zweimal" betätigen, nämlich zuerst lockern und danach wieder durchtreten, um den Motor wieder anzulassen oder auch erst das Gaspedal betätigen, damit der Motor wieder angelassen wird, sondern nunmehr wird der Motor sofort wieder angelassen, wenn der Fuß des Fahrers vom Bremspedal genommen wird. Die Zeit für das Umsetzen des Fußes vom Bremspedal auf das Gaspedal wird zum Wiederanlassen des Motors genutzt. Dies hat den Vorteil, daß sofort wenn der Fahrer den Fuß auf das Gaspedal stellt, der Motor bereits betriebsbereit, nämlich angelassen ist und das Kraftfahrzeug sofort abfahren kann. Für den Fahrer entsteht ein deutlich "spontanerer Eindruck" des Motorstarts bzw. des Losfahrens. Weiterhin kann das Zurückrollen an Steigungen auf ein Minimum reduziert werden, insbesondere wenn beispielsweise eine Kriechfunktion vorhanden ist, die das Kraftfahrzeug hält. Auch ist das Kraftfahrzeug aus der Sicht des Fahrers - subjektiv gesehen - immer im fahrbereiten Zustand und als solches ist dieser Zustand auch erkennbar, wenn der Fahrer nicht auf der Bremse steht. Es steht dann folglich nie mit stehendem, also abgeschaltetem Motor.

Es gibt nun eine Vielzahl von Möglichkeiten das erfindungsgemäße Verfahren bzw. die erfindungsgemäß Vorrichtung in vorteilhafter Weise auszugestalten und weiterzubilden.

Hierfür darf zunächst auf die dem Patentanspruch 1 bzw. dem Patentanspruch 9 nachgeordneten Patentansprüche verwiesen werden. Im folgenden soll nun anhand einer Zeichnung das erfindungsgemäße Verfahren bzw. die erfindungsgemäße Einrichtung näher erläutert werden.

In der Zeichnung zeigt:

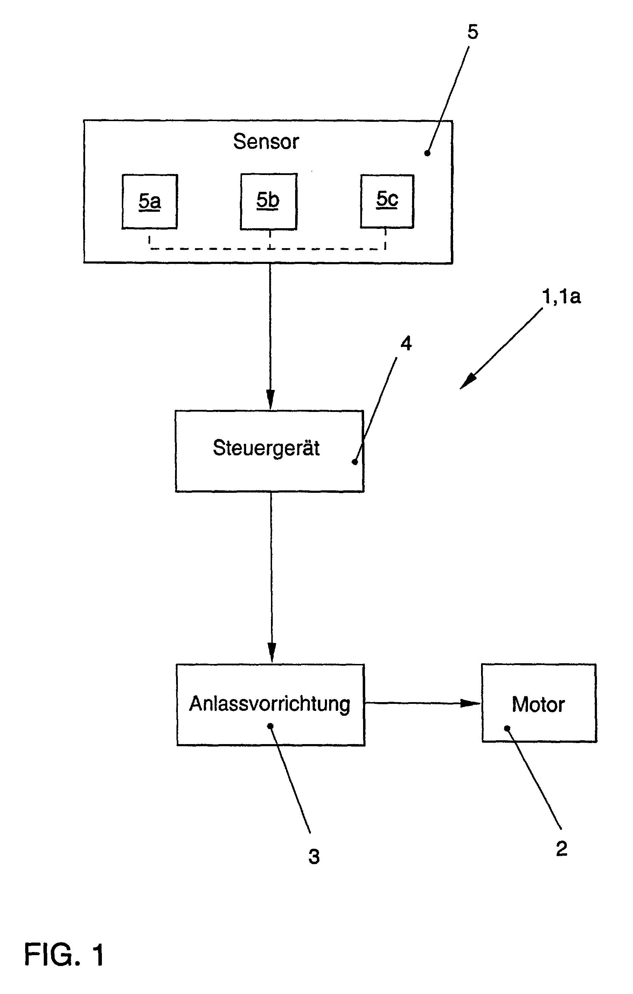

- Fig. 1: in schematischer und vereinfachter Darstellung eine elektronische Schalteinrichtung zur Durchführung des Verfahrens.

Bei dem Verfahren zum Wiederanlassen des Motors eines Kraftfahrzeuges wird der Motor im Standbetrieb, d.h. vor einer roten Ampel oder im Stau, zur Kraftstoffverbrauchseinsparung zumindest zeitweise, vorzugsweise aber solange, wie das Kraftfahrzeug steht, ausgeschaltet. Wird der Fahrbetriebszustand gewechselt, also vom Standbetrieb in den Fahrbetrieb, so wird der Motor wieder eingeschaltet.

Fig. 1 zeigt nun in schematischer Darstellung eine Einrichtung 1 zum Wiederanlassen eines Motors 2 eines hier nicht dargestellten Kraftfahrzeuges. Die Einrichtung 1 ist hier als elektronische Schalteinrichtung 1a ausgeführt und weist eine elektronische Anlaßvorrichtung 3 zum Einschaltung bzw. Anlassen des Motors 2 und ein elektronisches Steuergerät 4 auf. Weiterhin ist ein die Stellung und/oder die Bewegungsrichtung des hier nicht dargestellten Bremspedals ermittelnder Sensor 5 vorgesehen, wobei die Anlaßvorrichtung 3 und der Sensor 5 schaltungstechnisch mit dem Steuergerät 4 verbunden sind. Mit Hilfe des Steuergerätes 4 ist der Motor 2 im Standbetrieb ausschaltbar, wobei der Motor 2 für einen Wechsel des Fahrbetriebszustandes, d.h. vom Standbetrieb in den Fahrbetrieb mit Hilfe des Steuergerätes 4 wieder einschaltbar ist. Bspw. kann der Motor 2 ausgeschaltet werden, wenn die Fahrzeuggeschwindigkeit "Null" ist. Dies könnte über entsprechende Sensoren ermittelt werden, die hier zur Vereinfachung der Zeichnung nicht dargestellt, aber mit dem Steuergerät 4 schaltungstechnisch verbunden sind.

Die eingangs erläuterten Nachteile werden nun dadurch vermieden, daß - bei dem Verfahren - der Motor 2 eingeschaltet wird, wenn das bereits betätigte Bremspedal - aus seiner betätigten Stellung kommend, sich in seine Ausgangsposition zurückbewegend - eine bestimmte, zumindest seine Ausgangsstellung angenäherte Position erreicht hat. Hierzu ermittelt der Sensor 5 - bei der Bewegung des Bremspedals aus seiner betätigten Stellung in Richtung seiner Ausgangsposition - eine bestimmte, zumindest die Ausgangsstellung des Bremspedals angenäherte Position, wobei dann der Sensor 5 ein Signal an das Steuergerät 4 abgibt und durch das Steuergerät 4 bzw. durch die Anlaßvorrichtung 3 der Motor 2 einschaltbar ist bzw. angelassen wird. Durch dieses Verfahren bzw. durch diese Einrichtung 1 wird nun das Wiederanlassen des Motors 2 - verglichen mit dem Stand der Technik - erheblich vereinfacht, da der Motor 2 umgehend eingeschaltet wird, sobald der Fahrer den Fuß vom Bremspedal nimmt. Eine zusätzliche nochmals zweite Betätigung des Bremspedals zum Wiederanlassen des Motors 2 ist nicht mehr notwendig, wobei auch eine Betätigung des Gaspedals zum Anlassen des Motors 2 nicht nötig ist.

Der Motor 2 wird vorzugsweise dann erst eingeschaltet, wenn das aus seiner betätigten Stellung kommende Bremspedal seine Ausgangsstellung im wesentlichen vollständig erreicht hat. Wenn nämlich der Fahrer den Fuß vollständig vom Bremspedal nimmt, so zeigt er hiermit seine Absicht an, losfahren zu wollen. Es ist aber auch denkbar, daß der Motor 2 eingeschaltet wird, wenn das aus seiner betätigten Stellung kommende Bremspedal seine Ausgangsstellung nahezu erreicht hat, also kurz vor Erreichen seiner vollständigen Ausgangsstellung.

Der Motor 2 wird nun durch die elektronische Anlaßvorrichtung 3 eingeschaltet, wenn die elektronische Anlaßvorrichtung 3 ein entsprechendes Signal des Steuergerätes 4 erhält. Es gibt nun ganz unterschiedliche Möglichkeiten, um die Position des Bremspedals mit Hilfe eines Sensors 5 zu ermitteln. Aus diesem Grunde zeigt Fig. 1 einen Sensor 5, der unterschiedlich ausgebildet sein kann, was durch die innen liegenden Kästen zum Ausdruck gebracht werden soll.

Zunächst kann die Position des Bremspedals mit Hilfe eines Bremsdruckschalters 5a ermittelt und angezeigt werden. Hierzu wird dann, bei der Abnahme des vom Bremsdruckschalter 5a ermittelten Bremsdruckes, d.h. dann, wenn der Bremsdruckschalter 5a einen bestimmten geringen Bremsdruckwert ermittelt, durch den Bremsdruckschalter 5a dem Steuergerät 4 ein entsprechendes Signal zugeleitet, woraufhin das Steuergerät 4 den Motor 2 einschaltet.

Wie die Fig. 1 zeigt, bestehen unterschiedliche Möglichkeiten, den Sensor 5 entsprechend zu realisieren. Beispielsweise ist auch denkbar, daß der Motor eingeschaltet wird, wenn der Bremslichtschalter signalisiert, daß das Bremslicht ausgeschaltet ist, d.h. das Bremspedal also nicht betätigt wird. Diese Möglichkeit ist in der Fig. 1 aber nicht dargestellt. Es liegt im Ermessen des Durchschnittsfachmannes, daß der Motor 2 eingeschaltet wird, wenn der Bremslichtschalter "ausgeht", denn dies ist ja nur dann der Fall, wenn die Position des Bremspedals seine Ausgangsstellung erreicht hat. In dem Moment, wo der Bremslichtschalter "ausgeschaltet" wird, kann dann das Steuergerät 4 den Motor 2 einschalten.

Es ist aber auch möglich, daß der Sensor 5 als ein Winkelstellungsgeber 5b ausgebildet wird, der die Stellung des Bremspedals und/oder die Bewegungsrichtung entsprechend ermittelt und im Bereich des Bremspedals entsprechend angeordnet ist. Denkbar ist auch, daß im Bereich des Bremspedals ein - einfacher - Kontaktschalter 5c vorgesehen ist, der in einer bestimmten Stellung des Bremspedals, die im wesentlichen der vollständigen Ausgangsstellung entspricht oder aber zumindest einer dieser Ausgangsstellung sehr stark angenäherten Stellung, bei Erreichen dieser Position ein entsprechendes Signal an das Steuergerät 4 abgibt, so daß durch das Steuergerät 4 dann der Motor 2 einschaltbar ist. Hierzu kann der Kontaktschalter 5c aber erst aktiviert werden, wenn das Bremspedal bereits in eine bestimmte Position durchgedrückt worden ist, damit der Kontaktschalter 5c auslöst, wenn sich das Bremspedal in Richtung seiner Ausgangsstellung zurückbewegt.

Im Ergebnis ist durch das erfindungsgemäße Verfahren bzw. durch die erfindungsgemäße Einrichtung 1 erreicht, daß unnötige Zeitspannen zum Wiederanlassen eines Motors 2 bei einem Kraftfahrzeug vermieden werden, wobei für den Fahrer ein entsprechender Fahrkomfort erzielt wird.

### BEZUGSZEICHENLISTE

1 Einrichtung
1a elektronische Schalteinrichtung
2 Motor
3 elektronische Anlaßvorrichtung
4 Steuergerät
5 Sensor
5a Bremsdruckschalter
5b Winkelstellungsgeber
5c Kontaktschalter
6
7
8
9
10
11
12
13
14
15

X
Y
α₁
α₂

## Patentansprüche

1. Verfahren zum Wiederanlassen des Motors (2) eines Kraftfahrzeuges, wobei der Motor (2) in bestimmten Fahrbetriebszuständen, insbesondere im Standbetrieb, zur Kraftstoffverbrauchseinsparung zumindest zeitweise ausgeschaltet wird und für einen Wechsel des Fahrbetriebszustandes, vorzugsweise vom Standbetrieb in den Fahrbetrieb, durch eine Bremspedalbetätigung wieder eingeschaltet wird, **dadurch gekennzeichnet, daß** der Motor (2) eingeschaltet wird, wenn das bereits betätigte Bremspedal - aus seiner betätigten Stellung kommend, sich in seine Ausgangsposition zurückbewegend - eine bestimmte, zumindest seine Ausgangsstellung angenäherte Position erreicht hat.

2. Verfahren nach dem vorhergehenden Anspruch, **dadurch gekennzeichnet, daß** der Motor (2) eingeschaltet wird, wenn das aus seiner betätigten Stellung kommende Bremspedal seine Ausgangsstellung erreicht hat.

3. Verfahren nach einem der vorhergehenden Ansprüche, **dadurch gekennzeichnet, daß** der Motor (2) durch eine elektronische Anlaßvorrichtung (3) eingeschaltet wird, wenn die elektronische Anlaßvorrichtung (3) ein entsprechendes Signal eines Steuergerätes (4) erhält.

4. Verfahren nach einem der vorhergehenden Ansprüche, **dadurch gekennzeichnet, daß** die Position des Bremspedals dem Steuergerät (4) mit Hilfe des Bremsdruckschalters (5a) angezeigt wird.

5. Verfahren nach einem der vorhergehenden Ansprüche, **dadurch gekennzeichnet, daß** bei der Abnahme des vom Bremsdruckschalter (5a) ermittelten Bremsdruckes ab einem bestimmten geringen Bremsdruckwert das Steuergerät (4) ein entsprechendes Signal empfängt, woraufhin das Steuergerät (4) den Motor (2) einschaltet.

6. Verfahren nach einem der vorhergehenden Ansprüche, **dadurch gekennzeichnet, daß** die Position des Bremspedals dem Steuergerät (4) mit Hilfe des Bremslichtschalters angezeigt wird.

7. Verfahren nach einem der vorhergehenden Ansprüche, **dadurch gekennzeichnet, daß** der Motor (2) eingeschaltet wird, wenn der Bremslichtschalter signalisiert, daß das Bremslicht ausgeschaltet ist.

8. Verfahren nach einem der vorhergehenden Ansprüche, **dadurch gekennzeichnet, daß** die Stellung des Bremspedals durch einen im Bereich des Bremspedals entsprechenden Sensor (5), vzw. einen Winkelstellungsgeber (5b) oder einen Kontaktschalter (5c) ermittelt wird.

9. Einrichtung (1) zum Wiederanlassen eines Motors eines Kraftfahrzeuges, insbesondere elektronische Schalteinrichtung (1a) zur Durchführung des Verfahrens nach einem der Ansprüche 1 bis 8, mit einer elektronischen Anlaßvorrichtung (3) zum Einschalten bzw. Anlassen des Motors (2), mit einem elektronischen Steuergerät (4) und mit einem die Stellung und/oder Bewegungsrichtung des Bremspedals ermittelnden Sensor (5), wobei die Anlaßvorrichtung (3) und der Sensor (5) schaltungstechnisch mit dem Steuergerät (4) verbunden sind, wobei mit Hilfe des Steuergerätes (4) der Motor (2) in einem bestimmten Fahrbetriebszustand, insbesondere im Standbetrieb, zur Kraftstoffverbrauchseinsparung ausschaltbar und für einen Wechsel des Fahrbetriebszustandes, vorzugsweise vom Standbetrieb in den Fahrbetrieb, durch eine Bremspedalbetätigung einschaltbar ist, **dadurch gekennzeichnet, daß** - bei der Bewegung des Bremspedals aus einer betätigten Stellung in Richtung seiner Ausgangsposition - durch den Sensor (5) eine bestimmte, zumindest die Ausgangsstellung des Bremspedals angenäherte Position ermittelbar ist, durch den Sensor (5) ein Signal an das Steuergerät (4) abgebbar ist und durch daß Steuergerät (4) bzw. die Anlaßvorrichtung (3) dann der Motor (2) einschaltbar ist.

10. Einrichtung nach Anspruch 9, **dadurch gekennzeichnet, daß** der Sensor (5) als Bremsdruckschalter (5a) ausgeführt ist.

11. Einrichtung nach Anspruch 9, **dadurch gekennzeichnet, daß** der Sensor (5) als Winkelstellungsgeber (5b) ausgeführt ist.

12. Einrichtung nach Anspruch 9, **dadurch gekennzeichnet, daß** der Sensor (5) als Kontaktschalter (5c) ausgeführt ist.

13. Einrichtung nach Anspruch 9, **dadurch gekennzeichnet, daß** als Sensor (5) der Bremslichtschalter verwendet wird.

14. Einrichtung nach einem der Ansprüche 9 bis 13, **dadurch gekennzeichnet, daß** bei Erreichen der Ausgangsstellung des Bremspedals der Motor (2) einschaltbar ist.

## Claims

1. Method for restarting the engine (2) of a motor vehicle, the engine (2) being at least temporarily switched off in certain driving operating states, in particular during stationary operation, in order to save fuel, and being switched on again by activation of the brake pedal to change the driving operating state, preferably from stationery operation to driving operation, **characterized in that** the engine (2) is switched on if the brake pedal which has already been activated has reached a specific position at least approximated by its initial position, by moving back into its initial position from its activated position.

2. Method according to the preceding claim, **characterized in that** the engine (2) is switched on if the brake pedal has reached its initial position, coming from its activated position.

3. Method according to one of the preceding claims, **characterized in that** the engine (2) is switched on by means of an electronic starter device (3) if the electronic starter device (3) receives a corresponding signal of a control unit (4).

4. Method according to one of the preceding claims, **characterized in that** the position of the brake pedal is indicated to the control unit (4) using the brake pressure switch (5a).

5. Method according to one of the preceding claims, **characterized in that**, when the brake pressure determined by the brake pressure switch (5a) decreases below a specific low brake pressure value, the control unit (4) receives a corresponding signal, in response to which the control unit (4) switches on the engine (2).

6. Method according to one of the preceding claims, **characterized in that** the position of the brake pedal is indicated to the control unit (4) using the brake light switch.

7. Method according to one of the preceding claims, **characterized in that** the engine (2) is switched on if the brake pedal switch signals that the brake light is switched off.

8. Method according to one of the preceding claims, **characterized in that** the position of the brake pedal is determined by means of a corresponding sensor (5) in the region of the brake pedal, preferably an angular position sensor (5b) or a contact switch (5c).

9. Device (1) for restarting an engine of a motor vehicle, in particular an electronic switching device (1a) for carrying out the method according to one of Claims 1 to 8, having an electronic starter device (3) for switching on or starting up the engine (2), having an electronic control unit (4) and having a sensor (5) which determines the position and/or direction of movement of the brake pedal, the starter device (3) and the sensor (5) being connected by switching means to the control unit (4), it being possible to use the control unit (4) to switch off the engine (2) in a particular driving operating state, in particular during stationary operation, in order to save fuel, and to switch it on by means of an activation of the brake pedal to change the driving operating state, preferably from the stationary operation into the driving operation, **characterized in that**, during the movement of the brake pedal from an activated position in the direction of its initial position, a specific position which is approximated at least to the initial position of the brake pedal can be determined by means of the sensor (5), a signal can be output to the control unit (4) by means of the sensor (5), and the engine (2) can then be switched on by means of the control unit (4) or the starter device (3).

10. Device according to Claim 9, **characterized in that** the sensor (5) is embodied as a brake pressure switch (5a).

11. Device according to Claim 9, **characterized in that** the sensor (5) is embodied as an angular position sensor (5b).

12. Device according to Claim 9, **characterized in that** the sensor (5) is embodied as a contact switch (5c).

13. Device according to Claim 9, **characterized in that** the brake light switch is used as the sensor (5).

14. Device according to one of Claims 9 to 13, **characterized in that** the engine (2) can be switched on when the initial position of the brake pedal is reached.

## Revendications

1. Procédé pour redémarrer le moteur (2) d'un véhicule automobile, le moteur (2) étant débranché au moins par moments dans certaines situations de conduite pour économiser du carburant, en particulier à l'arrêt, et étant de nouveau branché lors d'un changement de situation de conduite, de préférence de l'arrêt à la conduite, par un actionnement de la pédale de frein, **caractérisé en ce que** le moteur (2) est branché lorsque la pédale de frein déjà actionnée, venant de sa position actionnée et revenant dans sa position de départ, a atteint une position définie au moins voisine de sa position de départ.

2. Procédé selon la revendication précédente, **caractérisé en ce que** le moteur (2) est branché lorsque la pédale de frein venant de sa position actionnée a atteint sa position de départ.

3. Procédé selon l'une des revendications précédentes, **caractérisé en ce que** le moteur (2) est branché par un dispositif électronique de démarrage (3) lorsque le dispositif électronique de démarrage (3) reçoit un signal approprié d'un appareil de commande (4).

4. Procédé selon l'une des revendications précédentes, **caractérisé en ce que** la position de la pédale de frein est indiquée à l'appareil de commande (4) à l'aide du contacteur de pression de frein (5a).

5. Procédé selon l'une des revendications précédentes, **caractérisé en ce que** lors de la diminution de la pression de frein détectée par le contacteur de pression de frein (5a), l'appareil de commande (4) reçoit un signal approprié à partir d'une petite valeur définie de la pression de frein, suite à quoi l'appareil de commande (4) branche le moteur (2).

6. Procédé selon l'une des revendications précédentes, **caractérisé en ce que** la position de la pédale de frein est indiquée à l'appareil de commande (4) à l'aide du contacteur de feux de freinage.

7. Procédé selon l'une des revendications précédentes, **caractérisé en ce que** le moteur (2) est branché lorsque le contacteur de feux de freinage signale que les feux de freinage sont débranchés.

8. Procédé selon l'une des revendications précédentes, **caractérisé en ce que** la position de la pédale de frein est détectée par une sonde (5) appropriée, par exemple un détecteur de position angulaire (5b) ou un contacteur (5c) situés dans la zone de la pédale de frein.

9. Dispositif (1) pour redémarrer le moteur d'un véhicule automobile, en particulier dispositif de électronique de commutation (1a) en vue de la mise en oeuvre du procédé selon l'une des revendications 1 à 8, comprenant un dispositif électronique de démarrage (3) pour le branchement ou le démarrage du moteur (2), un appareil électronique de commande (4) et une sonde (5) qui détecte la position et/ou le sens de déplacement de la pédale de frein, le dispositif de démarrage (3) et la sonde (5) étant reliés à commutation à l'appareil de commande (4), le moteur (2) pouvant être débranché à l'aide de l'appareil de commande (4) dans une situation de conduite définie, en particulier à l'arrêt, pour économiser la consommation de carburant, et pouvant être branché en vue d'une modification de la situation de conduite, par exemple de l'arrêt en roulage, par un actionnement de la pédale de frein.

10. Dispositif selon la revendication 9, **caractérisé en ce que** la sonde (5) est réalisée sous la forme d'un contacteur de pression de frein (5a).

11. Dispositif selon la revendication 9, **caractérisé en ce que** la sonde (5) est réalisée comme détecteur de position angulaire (5b).

12. Dispositif selon la revendication 9, **caractérisé en ce que** la sonde (5) est réalisée comme contacteur (5c).

13. Dispositif selon la revendication 9, **caractérisé en ce que** l'on utilise le contacteur de feux de freinage comme sonde (5).

14. Dispositif selon l'une des revendications 9 à 13, **caractérisé en ce que** le moteur peut être branché lorsque la pédale de frein a atteint la position de départ.
